(19) **Europäisches Patentamt / European Patent Office / Office européen des brevets**

(11) **EP 4 654 586 A1**

(12) # EUROPEAN PATENT APPLICATION
published in accordance with Art. 153(4) EPC

(43) Date of publication:
26.11.2025 Bulletin 2025/48

(21) Application number: 24744945.7

(22) Date of filing: 22.01.2024

(51) International Patent Classification (IPC):
$H04N\ 19/593^{(2014.01)}$      $H04N\ 19/105^{(2014.01)}$
$H04N\ 19/80^{(2014.01)}$       $H04N\ 19/176^{(2014.01)}$

(52) Cooperative Patent Classification (CPC):
H04N 19/105; H04N 19/176; H04N 19/593;
H04N 19/80

(86) International application number:
PCT/KR2024/001026

(87) International publication number:
WO 2024/155166 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.01.2023 KR 20230009050

(71) Applicant: LG Electronics Inc.
Yeongdeungpo-gu
Seoul 07336 (KR)

(72) Inventors:
• YOO, Sunmi
  Seoul 06772 (KR)
• NAM, Junghak
  Seoul 06772 (KR)
• CHOI, Jangwon
  Seoul 06772 (KR)
• JANG, Hyeongmoon
  Seoul 06772 (KR)

(74) Representative: Maikowski & Ninnemann
Patentanwälte Partnerschaft mbB
Postfach 15 09 20
10671 Berlin (DE)

(54) **METHOD AND DEVICE FOR IMAGE ENCODING/DECODING, AND STORAGE MEDIUM FOR STORING BITSTREAM**

(57)    An image decoding method and device according to the present disclosure may determine a reference block for intra prediction of a current block, generate a prediction sample of the current block by applying a filter to at least one of a reference sample belonging to the reference block, at least one neighboring sample adjacent to the reference sample, and a predetermined offset, and restore the current block on the basis of the prediction sample.

FIG.4

```
Determine reference block for intra prediction of
current block                                        ─ S400
          │
          ▼
Generate prediction sample of current block by
applying filter to reference sample belonging to     ─ S410
reference block
          │
          ▼
Reconstruct current block based on prediction
sample of current block                              ─ S420
```

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide an intra prediction method and apparatus.

The present disclosure is to provide the compensation method and apparatus of a reference sample.

[Technical Solution]

An image decoding method and apparatus according to the present disclosure may determine a reference block for intra prediction of a current block, generate a prediction sample of the current block by applying a filter to at least one of a reference sample belonging to the reference block, at least one neighboring sample adjacent to the reference sample or a predetermined offset and reconstruct the current block based on the prediction sample.

In an image decoding method and apparatus according to the present disclosure, the neighboring sample may include at least one of a left neighboring sample, a top neighboring sample, a left neighboring sample or a bottom neighboring sample.

In an image decoding method and apparatus according to the present disclosure, a filter coefficient of the filter may be determined based on at least one sample belonging to a first neighboring area of the current block and at least one sample belonging to a second neighboring area of the reference block.

In an image decoding method and apparatus according to the present disclosure, the second neighboring area may include a template of the reference block and an area extended by a N-sample line from the template of the reference block.

In an image decoding method and apparatus according to the present disclosure, the template may include at least one of a left neighboring area, a top neighboring area, a top-left neighboring area, a top-right neighboring area or a bottom-left neighboring area.

In an image decoding method and apparatus according to the present disclosure, at least one of a position or a size of the template may be determined based on a size of the reference block.

In an image decoding method and apparatus according to the present disclosure, the template may be determined as any one of a plurality of template candidates based on template type information signaled through a bitstream, and the template type information may represent at least one of the position or the size of the template.

In an image decoding method and apparatus according to the present disclosure, the filter coefficient of the filter may be derived by using some samples belonging to the second neighboring area of the reference block, and the some samples may be specified based on a predetermined sampling rate and a predetermined offset.

In an image decoding method and apparatus according to the present disclosure, the filter may be determined as any one of a plurality of filters based on a value of the reference sample and a predetermined threshold.

In an image decoding method and apparatus according to the present disclosure, samples within the template of the reference block may be classified into a plurality of sample intervals based on the predetermined threshold, and the plurality of filters may be derived for the plurality of sample intervals, respectively.

In an image decoding method and apparatus according to the present disclosure, the prediction sample may be generated based on a plurality of filters including the filter, and the plurality of filters may be derived from the plurality of template candidates, respectively.

An image encoding method and apparatus according to the present disclosure may determine a reference block for intra prediction of a current block, generate a prediction sample of the current block by applying a filter to at least one of a reference sample belonging to the reference block, at least one neighboring sample adjacent to the reference sample or a predetermined offset, derive a residual sample of the current block based on the prediction sample and encode the residual sample.

A computer-readable digital storage medium storing encoded video/image information that causes a decoding apparatus according to the present disclosure to perform an image decoding method is provided.

A computer-readable digital storage medium storing video/image information generated according to an image encoding method according to the present disclosure is provided.

A method and an apparatus for transmitting video/image information generated according to an image encoding method according to the present disclosure are provided.

[Technical Effects]

According to the present disclosure, encoding performance may be improved by deriving a compensation model with high accuracy and generating a prediction sample by referring to more neighboring samples other than a reference sample corresponding to a current sample.

According to the present disclosure, when samples within a template are selectively used based on a predetermined sampling rate and offset, an optimal tradeoff between operation complexity and performance may be derived.

According to the present disclosure, an optimal tradeoff between operation complexity and performance may be derived by adjusting the position/size of a template according to a block size.

According to the present disclosure, by selectively using any one of a plurality of template candidates, a model may be defined by more accurately reflecting the characteristics of a current block, thereby improving coding performance.

According to the present disclosure, prediction performance may be improved by defining a plurality of filter types and applying a more appropriate filter type to each reference sample.

According to the present disclosure, a final prediction block may be configured by reflecting an appropriate weight for various equations between a current block and a reference block, thereby improving coding performance.

[Brief Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an image decoding method performed by an encoding apparatus according to the present disclosure.

FIG. 5 shows a schematic configuration of an intra predictor 331 that performs an image decoding method according to the present disclosure.

FIG. 6 shows an image encoding method performed by an encoding apparatus according to the present disclosure.

FIG. 7 shows a schematic configuration of an intra predictor 222 that performs an image encoding method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

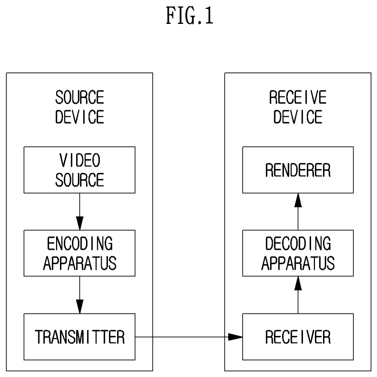

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

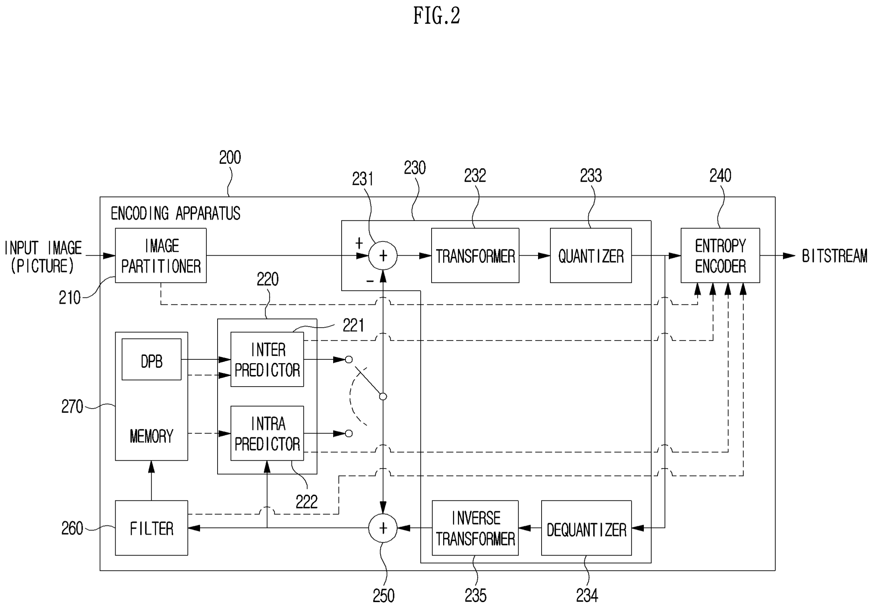

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

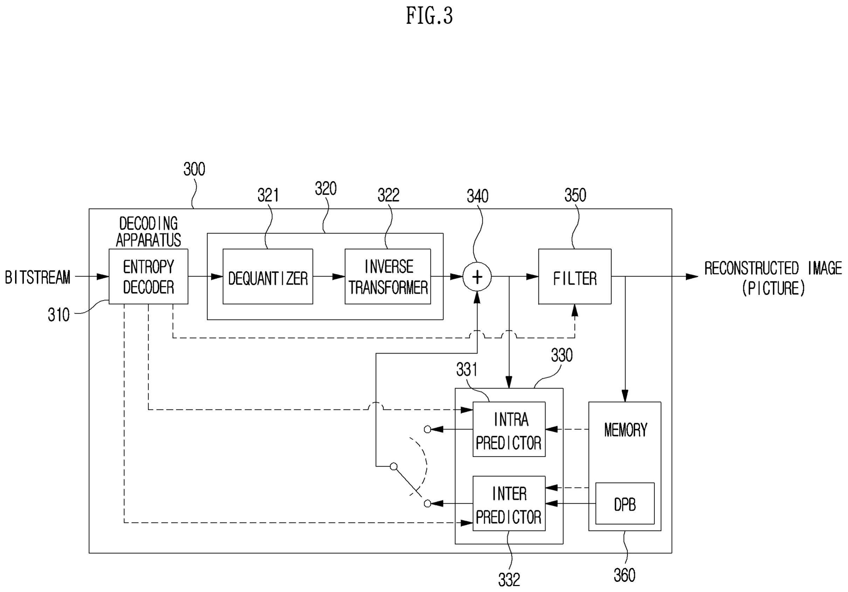

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

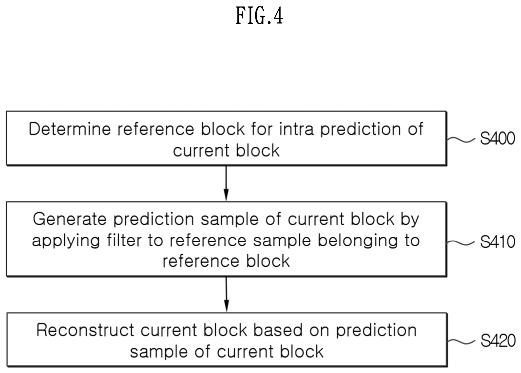

FIG. 4 shows an image decoding method performed by an encoding apparatus according to the present disclosure.

In the present disclosure, a method is proposed that defines a compensation model and utilizes it for an intra prediction block. A compensation method according to the present disclosure may configure a linear model by utilizing a predetermined scaling factor ($\alpha$) and an offset ($\beta$) for compensation between a current block and a reference block. In other words, a linear model satisfying Equation 1 below may be configured by utilizing the neighboring sample of a current block and the neighboring sample of a reference block.

[Equation 1]

$$pred_{final} = \alpha \cdot pred + \beta$$

A compensation model in the present disclosure may mean an illumination compensation model between a current block and a reference block, but is not limited thereto. Hereinafter, the compensation method of an intra prediction block will be described in detail.

Referring to FIG. 4, a reference block for the intra prediction of a current block may be determined S400.

As an example, the reference block of a current block may be determined based on intra template matching prediction (intra TMVP). Specifically, an area that is consistent with or most similar to the template of a current block may be searched in a pre-reconstructed area within a current picture, and a block using a corresponding area as a template may be determined as a reference block. The search may be performed within a pre-defined search range within the pre-reconstructed area. The reference block may belong to the same current picture as a current block.

For example, a cost with the template of a current block may be calculated while traversing within the pre-defined search range. A block using an area with the smallest cost among the calculated costs as a template may be determined as a reference block. Here, a cost may be calculated based on the sum of absolute difference (SAD), the sum of absolute transformed difference (SATD) or the sum of squared difference (SSE).

Information representing whether intra template matching prediction is applied may be signaled through a bitstream, and intra template matching prediction may be adaptively performed based on corresponding information. In addition, the pre-defined search range may include at least one of a current coding tree unit (CTU) to which a current block belongs or a neighboring CTU adjacent to a current CTU. Here, a neighboring CTU may include at least one of a top-left neighboring CTU, a top neighboring CTU or a left neighboring CTU.

Alternatively, a current block may be a block encoded in an intra block copy mode (IBC mode). In this case, a reference block may be determined based on the block vector of a current block. The block vector may specify the position of a reference block in a pre-reconstructed area within a current picture. Similarly, the reference block may belong to the same current picture as a current block.

Referring to FIG. 4, a filter may be applied to at least one of a reference sample belonging to the reference block, at least one neighboring sample adjacent to the reference sample or a predetermined offset to generate the prediction sample of a current block S410.

A neighboring sample, which is the input of the filter, may be one or more samples adjacent to a reference sample. The neighboring sample may include at least one of a left neighboring sample, a right neighboring sample, a top neighboring sample, a bottom neighboring sample, a top-left neighboring sample, a bottom-left neighboring sample, a top-right neighboring sample or a bottom-right neighboring sample adjacent to a reference sample. An offset, which is the input of the filter, may be determined based on the bit depth of a current image to which a current block belongs. However, it is not limited thereto, and a sample that is not adjacent to a reference sample but is adjacent to at least one of the neighboring samples described above may be further used. Here, the shape of an area to which the filter is applied within a reference block may be square, non-square, cross-shaped or diamond-shaped.

According to the position of a reference sample to which the filter is applied, a filter length or a filter shape, there may be a case where at least one of the neighboring samples does not belong to a reference block. As an example, a neighboring sample that does not belong to a reference block may belong to one or more sample lines neighboring at least one of the left, top, right or bottom directions of a reference block. Even when a neighboring sample, which is the input of the filter, does not belong to a reference block, a prediction sample may be generated by using a corresponding neighboring sample as it is. Alternatively, it may be restricted so that compensation is performed by using only samples belonging to a reference block. When a filter is applied to a reference sample positioned at the boundary of a reference block, there may be an unavailable neighboring sample. In this case, an unavailable neighboring sample may be substituted with the nearest available sample and a filter may be applied.

The filter may be a filter for linear compensation. The filter may be a filter for the weighted sum of at least two of a reference sample belonging to the reference block, at least one neighboring sample adjacent to the reference sample or a predetermined offset. The filter may be a M-tap convolution filter where a filter length (or, the number of filter coefficients) is M. M may be an integer greater than or equal to 2.

The filter coefficient of the filter may be derived based on one or more samples belonging to the template of a current block and one or more samples belonging to the template of a reference block. A template in the present disclosure may refer to a template separate from a template for intra template matching prediction described above. In other words, a template for intra template matching prediction may be defined as a template for determining an optimal reference block, and a template in the present disclosure may be defined as a template for deriving the filter coefficient of a filter for compensation of a reference sample. Hereinafter, for convenience of a description, the template of a current block and the template of a reference block will be referred to as a current template and a reference template, respectively.

As an example, a filter with a filter length of 6 may be used. In this case, as in Equation 2 below, compensation may be performed on a reference sample based on a 6-tap convolution filter.

$$\text{pred}'_{x,y} + c1\,pred_{x,y-1} + c2\,pred_{x,y+1} + c3\,pred_{x+1,y} + c4\,pred_{x-1y} + c5B \qquad \text{[Equation 2]}$$

According to Equation 2, a prediction sample ($\text{pred}'_{x,y}$) at the (x, y) position within a current block may be generated based on a reference sample ($pred_{x,y}$) at the (x, y) position within a reference block and neighboring samples. Here, neighboring samples may include a left neighboring sample ($pred_{x-1,y}$), a right neighboring sample ($pred_{x+1,y}$), a top neighboring sample ($pred_{x,y-1}$) and a bottom neighboring sample ($pred_{x,y+1}$) adjacent to the reference sample. When the width and height of a current block are W and H, respectively, x may be greater than or equal to 0 and less than W, and y may be greater than or equal to 0 and less than H.

In Equation 2, ci(i=0..5) represents a filter coefficient, which may be calculated by the least square method by using a sample belonging to a current template and a sample belonging to a reference template. B may be defined as (1 << (BitDepth-1)). Here, BitDepth may mean the bit depth of a current image.

A vector (A) including the sample and offset of a reference template, the vector (w) of a filter coefficient and the sample vector (p) of a current template may be defined as in Equation 3 below.

[Equation 3]

$$A*w = p$$

When Equation 3 is expressed as a normal equation, it may be expressed as an equation composed of the autocorrelation of A and the crosscorrelation of A and p, as in Equation 4 below.

[Equation 4]

$$A^T*A*w = A^T*p$$

Here, various methods may be used to derive a filter coefficient (w). For example, a filter coefficient may be derived by directly calculating the inverse matrix of an autocorrelation matrix. Alternatively, a linear system solution method may be used. For example, a filter coefficient may be derived by forward substitution and backward substitution after decomposing an autocorrelation matrix into a lower triangular matrix and an upper triangular matrix by using a cholesky method. Alternatively, an autocorrelation matrix may be decomposed into a lower triangular matrix, a diagonal matrix and an upper triangular matrix by using a LDL decomposition method to derive a filter coefficient. Alternatively, a filter coefficient may be derived by using a Gaussian elimination method. Alternatively, when a model in Equation 2 is defined for compensation of an intra prediction block and a filter coefficient in Equation 2 is derived by using the linear system solution of a specific method, it may be considered as a method consistent with the present disclosure.

A current template according to the present disclosure may mean a pre-reconstructed neighboring area before a current block. As an example, a current template may include at least one of a top neighboring area, a left neighboring area, a top-left neighboring area, a bottom-left neighboring area or a top-right neighboring area adjacent to a current block. Similarly, a reference template may include at least one of a top neighboring area, a left neighboring area, a top-left neighboring area, a bottom-left neighboring area or a top-right neighboring area adjacent to a reference block as an area corresponding to a current template.

The height of the top neighboring area, the top-left neighboring area and/or the top-right neighboring area may be N. The width of the left neighboring area, the top-left neighboring area and/or the bottom-left neighboring area may be N. N may be an integer greater than or equal to 1. The width of the top neighboring area may be greater than or equal to the width of a current block (or a reference block), and the height of the left neighboring area may be greater than or equal to the height of a current block (or a reference block). However, it is not limited thereto, and the height of the top neighboring area may be different from the width of the left neighboring area.

A filter coefficient may be derived by additionally using an area that is extended by a K-sample line from the reference template. Alternatively, a filter coefficient may be derived by additionally using an area that is extended by a K-sample line from an area composed of a reference template and a reference block. Here, K may be an integer greater than or equal to 1. An extension direction may include at least one of a top direction, a left direction, a bottom direction or a right direction. Whether the extended area is used may be adaptively determined based on at least one of the position of a reference sample to which a filter is applied, a filter length or a filter shape.

There may be a case where a neighboring sample, which is the input of a filter, is not available according to at least one of the position of a reference sample to which a filter is applied, a filter length or a filter shape. In this case, instead of using an extended template, the unavailable neighboring sample may be derived based on one or more samples within a reference template. The unavailable neighboring sample may be substituted with a sample that is closest to the unavailable neighboring sample among the samples belonging to the reference template.

Specifically, a reference template may be defined as a set of N sample line(s) adjacent to the top and left of a reference block. Here, the size (N) of a reference template may be an integer greater than or equal to 1. It is assumed that the width and height of a reference block are W and H, respectively.

As an example, a reference template may be composed of a WxN top neighboring area, a NxN top-left neighboring area and a NxH left neighboring area. Alternatively, a reference template may be composed of a 2WxN top neighboring area, a NxN top-left neighboring area and a Nx2H left neighboring area. Alternatively, a reference template may be composed of a WxN top neighboring area, a WxN top-right neighboring area, a NxN top-left neighboring area, a NxH left neighboring area and a NxH bottom-left neighboring area.

Alternatively, a reference template may be defined as a set of N sample line(s) adjacent to the top of a reference block. Here, the size (N) of a reference template may be an integer greater than or equal to 1. It is assumed that the width and height of a reference block are W and H, respectively.

As an example, a reference template may be composed of WxN top neighboring areas. Alternatively, a reference template may be composed of 2WxN top neighboring areas. Alternatively, a reference template may be composed of a WxN top neighboring area and a WxN top-right neighboring area.

Alternatively, a reference template may be defined as a set of N sample line(s) adjacent to the left of a reference block. Here, the size (N) of a reference template may be an integer greater than or equal to 1. It is assumed that the width and height of a reference block are W and H, respectively.

As an example, a reference template may be composed of NxH left neighboring areas. Alternatively, a reference template may be composed of Nx2H left neighboring areas. Alternatively, a reference template may be composed of a NxH left neighboring area and a NxH bottom-left neighboring area.

Alternatively, a reference template may be defined as a set of N sample line(s) adjacent to the top and left of a reference block. Here, the size (N) of a reference template may be an integer greater than or equal to 1. It is assumed that the width and height of a reference block are W and H, respectively.

As an example, a reference template may be composed of a WxN top neighboring area and a NxH left neighboring area. Alternatively, a reference template may be composed of a 2WxN top neighboring area and a Nx2H left neighboring area. Alternatively, a reference template may be composed of a WxN top neighboring area, a WxN top-right neighboring area, a NxH left neighboring area and a NxH bottom-left neighboring area.

A method for configuring a reference template described above may be applied equally to a method for configuring a current template, and an overlapping description will be omitted.

A plurality of template candidates may be defined equally for an encoding apparatus and a decoding apparatus. Here, a plurality of template candidates may include at least one of the template configuration examples regarding the above-described template position. As an example, a plurality of template candidates may include the first template candidate composed of a WxN top neighboring area, a NxN top-left neighboring area and a NxH left neighboring area and the second template candidate composed of a 2WxN top neighboring area, a NxN top-left neighboring area and a Nx2H left neighboring area. Alternatively, a plurality of template candidates may include the first template candidate composed of a WxN top neighboring area and a NxH left neighboring area, the second template candidate composed of WxN top neighboring areas and the third template candidate composed of NxH left neighboring areas.

Alternatively, a plurality of template candidates may be configured according to any one of the template configuration examples for the above-described template position, but may have a different size (N). As an example, a plurality of template candidates may include the first template candidate including a $N_1$xH left neighboring area and the second template candidate including a $N_2$xH left neighboring area. Here, $N_1$ and $N_2$ may be a different integer.

Alternatively, a plurality of template candidates may be configured according to at least two of the template configuration examples regarding the above-described template position, and any one of the template candidates may have a different size (N) from the other. Alternatively, a plurality of template candidates may include the first template candidate composed of a Wx$N_1$ top neighboring area and a $N_1$xH left neighboring area, the second template candidate composed of 2Wx$N_2$ top neighboring areas and the third template candidate composed of $N_2$x2H left neighboring areas.

Any one of the plurality of pre-defined template candidates may be selectively used. Template type information for selecting any one of the plurality of template candidates may be used. Template type information may include at least one of information representing the position of a template or information representing the size of a template. In this case, template type information may be defined as one index to represent the position and size of a template. Alternatively, information representing the position of a template and information representing the size of a template may be defined as a separate index, respectively.

At least one of the template type information may be signaled through a bitstream. The template type information may be defined in an area unit such as a video sequence, a picture, a slice, etc., and may be signaled at a higher level such as a sequence parameter set (SPS), a picture parameter set (PPS), a picture header (PH) and a slice header (SH). Alternatively, the template type information may be defined in a block unit such as a coding tree unit, a coding unit, a sub-block, etc., and may be signaled at a lower level such as a coding tree unit syntax and a coding unit syntax. Information representing the position of a template and information representing the size of a template may be signaled in the same area unit or block unit. Information representing the position of a template and information representing the size of a template may be signaled in a different area unit or block unit. Any one of information representing the position of a template and information representing the size of a template may be signaled in any one of the above-described area units, and the other may be signaled in any one of the above-described block units.

Alternatively, template type information (e.g., information representing the position of a template) may be derived based on the size of a reference block (or a current block). In other words, any one of a plurality of template candidates may be selected based on the size of a reference block (or a current block).

As an example, when the width of a reference block is greater than the height, a template candidate including a top neighboring area may be used. Conversely, when the width of a reference block is less than the height, a template candidate including a left neighboring area may be used. Otherwise (i.e., when the width and height of a reference block are the same), a template candidate that includes a left neighboring area, a top neighboring area and a top-left neighboring area may be used, or a template candidate that includes a top neighboring area and a left neighboring area, but does not include a top-left neighboring area may be used.

Alternatively, template type information (e.g., information representing the size of a template) may be derived based on the size of a reference block (or a current block). In other words, any one of a plurality of template candidates may be selected based on the size of a reference block (or a current block). The size (N) of a template may be variably determined based on the size of a reference block (or a current block).

As an example, when the number of samples belonging to a reference block (or a current block) is less than or equal to 64, a template candidate having a size of $N_1$ may be selected, and otherwise, a template candidate having a size of $N_2$ may be selected. Alternatively, when the number of samples belonging to a reference block (or a current block) is less than or equal to 64, the size of a template may be determined as $N_1$, and otherwise, the size of a template may be determined as $N_2$. Here, $N_1$ may be an integer less than $N_2$. As an example, $N_1$ and $N_2$ may be 4 and 6, respectively, but are not limited thereto.

As described above, by selectively using any one of a plurality of template candidates, a model may be defined by more accurately reflecting the characteristics of a current block, thereby improving coding performance. In addition, an optimal tradeoff between operation complexity and performance may be derived by adjusting the position/size of a template according to a block size.

All samples belonging to current and/or reference templates may be used to derive a filter coefficient. Alternatively, a filter coefficient may be derived by using only some samples selected among the samples belonging to current and/or reference templates. In other words, a compensation model may be derived based on only some sample(s) without traversing all samples within a template.

Specifically, it is assumed that a sampling rate of i and an offset of a are applied to the x-axis, and a sampling rate of j and an offset of b are applied to the y-axis. When a sample at the (x, y) position within a template is $T_{x,y}$, sample(s) required to derive a filter coefficient may be expressed as $T_{i*x+a,j*y+b}$. Here, an offset may be any one of the integers including 0. a and b may be a different integer or may be the same integer.

As an example, a filter coefficient may be derived by using only samples belonging to at least one even row and at least one even column within a template. In this case, sample(s) for deriving a filter coefficient may be expressed as $T_{2x,2y}$. A filter coefficient may also be derived by using only samples belonging to at least one odd row and at least one odd column within a template. A filter coefficient may also be derived by using only samples belonging to at least one odd row or at least one odd column within a template. A filter coefficient may also be derived by using only samples belonging to at least one even row or at least one even column within a template.

When samples within a template are selectively used based on a predetermined sampling rate and offset, an optimal tradeoff between operation complexity and performance may be derived. In addition, encoding performance may be improved by deriving a compensation model with high accuracy and generating a prediction sample by referring to more neighboring samples other than a reference sample corresponding to a current sample.

For a current block, at least two compensation models, not a single compensation model, may be derived/defined. Any one of a plurality of compensation models may be selected according to a specific condition. In this case, any one of a plurality of compensation models may be selected for each reference sample within a reference block. Alternatively, any one of a plurality of compensation models may be selected for each sample interval of one or more reference samples. Here, a specific condition may be a size relationship between a specific reference sample within a reference block and a predetermined threshold. Hereinafter, a compensation model is referred to as a filter.

As an example, a filter may be derived by traversing all or a part of the samples of a reference template. In this case, samples within a reference template may be classified into a plurality of sample intervals based on whether the value of a sample within a reference template is less than a predetermined threshold. A filter may be derived for each sample interval.

A sample interval to which a corresponding reference sample belongs may be determined based on whether the value of a reference sample within a reference block is less than a predetermined threshold. A filter corresponding to the determined sample interval may be applied to a corresponding reference sample. For example, when (L-1) thresholds are derived/defined, L filter types may be derived/defined for a current block. When the value of a reference sample within a reference block is greater than or equal to the first threshold, the first filter may be used. When the value of a reference sample within a reference block is less than the first threshold and greater than or equal to the second threshold, the second filter may be used. When the value of a reference sample within a reference block is less than the (L-2)-th threshold and greater than or equal to the (L-1)-th threshold, the (L-1)-th filter may be used. In other cases, the L-th filter may be used. L may be an integer greater than or equal to 1.

A threshold according to the present disclosure may be determined based on at least one of the average value of samples within a reference block, at least one of the minimum value, the maximum value or the median value of samples within a reference block, the bit depth of a current image or information signaled to specify the threshold.

According to the present disclosure, prediction performance may be improved by defining a plurality of filter types and applying a more appropriate filter type to each reference sample.

Alternatively, at least two filters may be derived/defined for a current block. At least two filters may be applied to a reference sample, respectively, to generate at least two prediction samples. At least two prediction samples above may be weighted summed to generate one final prediction sample.

As an example, as in a method described above, at least two filters may be derived/defined based on the value of a sample within a reference template and a predetermined threshold. At least two filters may be applied to the samples of a current template, respectively, to generate at least two filtered current templates. A cost between a filtered current template and a reference template may be calculated. Here, a cost may be a value obtained by measuring a difference between a filtered current template and a reference template. The cost may be calculated based on the sum of absolute difference (SAD), the sum of absolute transformed difference (SATD) or the sum of squared difference (SSE).

At least two filters may be applied to a reference sample within a reference block, respectively, to generate at least two prediction samples. At least two prediction samples may be weighted summed to generate a final prediction sample. In this case, a weight for the weighted sum may be determined based on the calculated cost. The sum of costs calculated for at least two filters may become the denominator of a weight, and a specific cost may become the numerator of a weight. In this case, a larger weight may be applied to a prediction sample generated based on a filter having a relatively small cost.

For example, a final prediction sample based on the weighted sum of two prediction samples may be generated as in Equation 5 below.

[Equation 5]

$$pred_{x,y} = \frac{Cost1}{Cost0 + Cost1} f_0\big(refBlock_{x,y}\big) + \frac{Cost0}{Cost0 + Cost1} f_1\big(refBlock_{x,y}\big)$$

In Equation 5, $pred_{x,y}$ may represent a final prediction sample at the (x, y) position within a current block. Cost0 may mean the first cost between a reference template and a current template to which the first filter is applied among a plurality of filters. Cost1 may mean the second cost between a reference template and a current template to which the second filter is applied among a plurality of filters. $f_0(refBlock_{x,y})$ may mean the first prediction sample generated by applying the first filter to a reference sample at the (x, y) position within a reference block. $f_1(refBlock_{x,y})$ may mean the second prediction sample generated by applying the second filter to a reference sample at the (x, y) position within a reference block.

According to Equation 5, when Cost0 is smaller than Cost1, a larger weight may be applied to the first prediction sample generated by applying the first filter. In other words, the ratio of weights applied to the first prediction sample and the second prediction sample may be Cost1:Cost0. Conversely, when Cost0 is greater than or equal to Cost1, a larger weight may be applied to the second prediction sample generated by applying the second filter. In other words, the ratio of weights applied to the first prediction sample and the second prediction sample may be Cost1:Cost0.

According to a method described above, a final prediction block may be configured by reflecting an appropriate weight for various equations between a current block and a reference block, thereby improving coding performance.

Alternatively, at least two filters, not a single filter, may be derived/defined for a current coding block. At least two filters above may be derived based on at least two template candidates (or, sample(s) at a specific position within a plurality of template candidates). At least two template candidates above may be defined by the above-described method for configuring a template candidate, wherein an overlapping description will be omitted. At least two filters above may be applied to the reference sample of a reference block, respectively, to generate at least two prediction samples. At least two prediction samples above may be weighted summed to generate one final prediction sample.

As an example, at least two filters for a current block may include at least one of the first filter derived from a left neighboring area, the second filter derived from a top neighboring area, the third filter derived from left and top neighboring areas or the fourth filter derived from left, top and top-left neighboring areas. Alternatively, at least two filters may be derived by using a different sampling rate, offset and/or threshold within the same template candidate.

For example, the first filter may be derived from the first template candidate including a left neighboring area, and the second filter may be derived from the second template candidate including a top neighboring area. The two filters may be applied to the samples of a current template, respectively, to generate two filtered current templates. A cost between a filtered current template and a reference template may be calculated. Here, a cost may be a value obtained by measuring a difference between a filtered current template and a reference template. The cost may be calculated based on the sum of absolute difference (SAD), the sum of absolute transformed difference (SATD) or the sum of squared difference (SSE).

The first prediction sample may be generated by applying the first filter to a reference sample within a reference block, and the second prediction sample may be generated by applying the second filter to the reference sample. A final prediction sample may be generated through the weighted sum of the first prediction sample and the second prediction sample. A weight for the weighted sum may be determined based on the calculated cost. The sum of costs calculated for the two filters may become the denominator of a weight, and a specific cost may become the numerator of a weight. In this case, a larger weight may be applied to a prediction sample generated based on a filter having a relatively small cost.

For example, a final prediction sample based on the weighted sum of two prediction samples may be generated as in Equation 6 below.

[Equation 6]

$$pred_{x,y} = \frac{Cost_{Above}}{Cost_{Left} + Cost_{Above}} f_{Left}\left(refBlock_{x,y}\right)$$
$$+ \frac{Cost_{Left}}{Cost_{Left} + Cost_{Above}} f_{Above}\left(refBlock_{x,y}\right)$$

In Equation 6, $pred_{x,y}$ may represent a final prediction sample at the (x, y) position within a current block. $Cost_{Left}$ may mean the first cost between a reference template and a current template to which the first filter is applied among a plurality of filters. Here, the first filter may be derived from the second template candidate including a left neighboring area. $Cost_{Above}$ may mean the second cost between a reference template and a current template to which the second filter is applied among a plurality of filters. Here, the second filter may be derived from the first template candidate including a top neighboring area. $f_{Left}(refBlock_{x,y})$ may mean the first prediction sample generated by applying the first filter to a reference sample at the (x, y) position within a reference block. $f_{Above}(refBlock_{x,y})$ may mean the second prediction sample generated by applying the second filter to a reference sample at the (x, y) position within a reference block.

According to Equation 6, when $Cost_{Left}$ is smaller than $Cost_{Above}$, a larger weight may be applied to the first prediction sample generated by applying the first filter. In other words, the ratio of weights applied to the first prediction sample and the second prediction sample may be $Cost_{Above}:Cost_{Left}$. Conversely, when $Cost_{Left}$ is greater than or equal to $Cost_{Above}$, a larger weight may be applied to the second prediction sample generated by applying the second filter. In other words, the ratio of weights applied to the first prediction sample and the second prediction sample may be $Cost_{Above}:Cost_{Left}$.

According to a method described above, a final prediction block may be configured by reflecting an appropriate weight for various equations between a current block and a reference block, thereby improving coding performance.

Referring to FIG. 4, a current block may be reconstructed based on the prediction sample of a current block S420.

The current sample of a current block may be reconstructed based on the prediction sample and the residual sample of a current block. The residual sample may be derived by deriving a transform coefficient based on residual information obtained as a bitstream and performing dequantization/inverse transform on a derived transform coefficient.

Meanwhile, a compensation method described above may also be applied to linear model-based intra prediction between a luma component block and a chroma component block in the same/similar manner. In this case, a current block and a reference block in a compensation method described above may be understood by being substituted with the chroma component block and the luma component block of a current block, respectively.

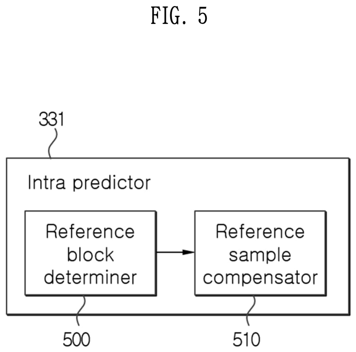

FIG. 5 shows a schematic configuration of an intra predictor 331 that performs an image decoding method according to the present disclosure.

Referring to FIG. 5, an intra predictor 331 may include a reference block determiner 500 and a reference sample compensator 510.

A reference block determiner 500 may determine the reference block of a current block. Here, a reference block may be determined based on intra template matching prediction or a block vector, which may be the same as described by referring to FIG. 4.

A reference sample compensator 510 may generate the prediction sample of a current block by applying a filter to at least one of a reference sample belonging to the reference block, at least one neighboring sample adjacent to the reference sample or a predetermined offset.

The filter has a predetermined filter length, and may be a filter for linear compensation. Alternatively, the filter may be a filter for the weighted sum of at least two of a reference sample belonging to the reference block, at least one neighboring sample adjacent to the reference sample or a predetermined offset.

The filter coefficient of the filter may be derived based on one or more samples belonging to the template of a current block and one or more samples belonging to the template of a reference block. A method for deriving a template and the filter coefficient according to the present disclosure is the same as described by referring to FIG. 4.

In addition, a plurality of filters may be derived/defined for a current block, and a method for generating a prediction sample based on a plurality of filters is the same as described by referring to FIG. 4.

A prediction sample, which is the output of the reference sample compensator 510, may be input to the adder 340 of a decoding apparatus 300 and used to reconstruct a current block.

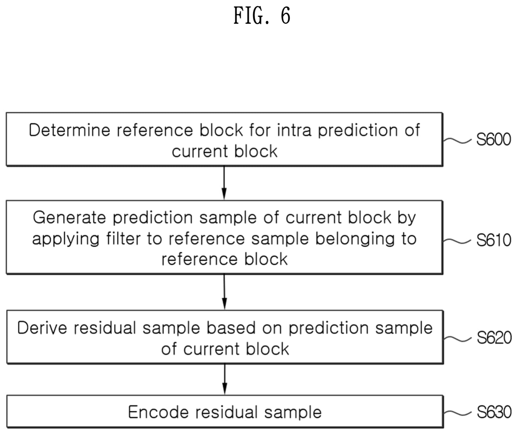

FIG. 6 shows an image encoding method performed by an encoding apparatus according to the present disclosure.

Referring to FIG. 6, a reference block for the intra prediction of a current block may be determined S600.

A reference block for the intra prediction of a current block may be determined based on intra template matching prediction. Alternatively, the reference block may be determined based on the motion vector or block vector of a neighboring block adjacent to a current block. It is the same as described by referring to FIG. 4. A reference block according to the present disclosure may belong to the same current picture as a current block.

Referring to FIG. 6, a filter may be applied to at least one of a reference sample belonging to the reference block, at least one neighboring sample adjacent to the reference sample or a predetermined offset to generate the prediction sample of a current block S610.

The filter has a predetermined filter length, and may be a filter for linear compensation. Alternatively, the filter may be a filter for the weighted sum of at least two of a reference sample belonging to the reference block, at least one neighboring sample adjacent to the reference sample or a predetermined offset.

The filter coefficient of the filter may be derived based on one or more samples belonging to the template of a current block and one or more samples belonging to the template of a reference block. A method for deriving a template and the filter coefficient according to the present disclosure is the same as described by referring to FIG. 4.

In addition, a plurality of filters may be derived/defined for a current block, and a method for generating a prediction sample based on a plurality of filters is the same as described by referring to FIG. 4.

Referring to FIG. 6, the residual sample of a current block may be derived based on the prediction sample S620, and the residual sample may be encoded to generate a bitstream S630.

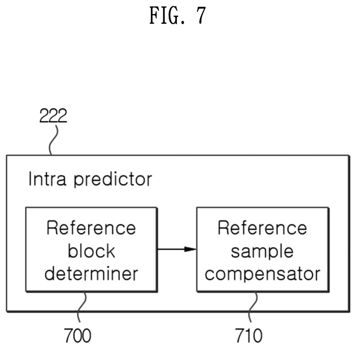

FIG. 7 shows a schematic configuration of an intra predictor 222 that performs an image encoding method according to the present disclosure.

Referring to FIG. 7, an intra predictor 222 may include a reference block determiner 700 and a reference sample compensator 710.

A reference block determiner 700 may determine a reference block for the intra prediction of a current block. It is the same as described by referring to FIG. 6.

A reference sample compensator 710 may generate the prediction sample of a current block by applying a filter to at least one of a reference sample belonging to the reference block, at least one neighboring sample adjacent to the reference sample or a predetermined offset.

The filter has a predetermined filter length, and may be a filter for linear compensation. Alternatively, the filter may be a filter for the weighted sum of at least two of a reference sample belonging to the reference block, at least one neighboring sample adjacent to the reference sample or a predetermined offset.

The filter coefficient of the filter may be derived based on one or more samples belonging to the template of a current block and one or more samples belonging to the template of a reference block. A method for deriving a template and the filter coefficient according to the present disclosure is the same as described by referring to FIG. 4.

In addition, a plurality of filters may be derived/defined for a current block, and a method for generating a prediction sample based on a plurality of filters is the same as described by referring to FIG. 4.

A prediction sample, which is the output of the reference sample compensator 710, may be input to the residual processor 230 of an encoding apparatus 200. A residual processor 230 may derive a residual sample based on a prediction sample, perform transform/quantization on a residual sample to derive a transform coefficient and generate residual information on the derived transform coefficient. The residual information may be input to an entropy encoder 240, and an entropy encoder 240 may encode residual information to generate a bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an augmented reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

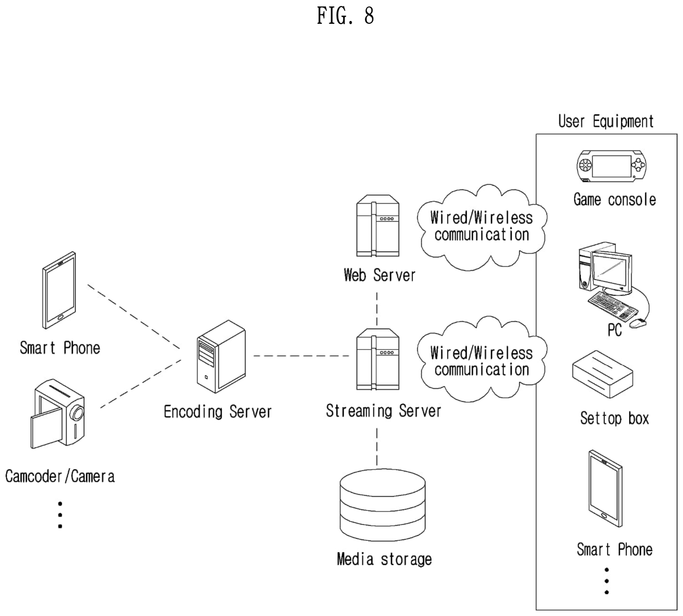

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1. An image decoding method, comprising:

determining a reference block for intra prediction of a current block;

generating a prediction sample of the current block by applying a filter to at least one of a reference sample belonging to the reference block, at least one neighboring sample adjacent to the reference sample, or a predetermined offset; and

reconstructing the current block based on the prediction sample.

2. The method of claim 1, wherein the reference block is determined based on an intra template matching prediction.

3. The method of claim 1, wherein the neighboring sample includes at least one of a left neighboring sample, a top neighboring sample, a left neighboring sample, or a bottom neighboring sample.

4. The method of claim 1, wherein a filter coefficient of the filter is determined based on at least one sample belonging to a first neighboring area of the current block and at least one sample belonging to a second neighboring area of the reference block.

5. The method of claim 4, wherein the second neighboring area includes a template of the reference block and an area extended by a N-sample line from the template of the reference block.

6. The method of claim 5, wherein the template includes at least one of a left neighboring area, a top neighboring area, a top-left neighboring area, a top-right neighboring area, or a bottom-left neighboring area.

7. The method of claim 5, wherein at least one of a position or a size of the template is determined based on a size of the reference block.

8. The method of claim 5, wherein the template is determined as any one of a plurality of template candidates based on template type information signaled through a bitstream, and

wherein the template type information represents at least one of a position or a size of the template.

9. The method of claim 4, wherein the filter coefficient of the filter is derived by using some samples belonging to the second neighboring area of the reference block, and

wherein the some samples are specified based on a predetermined sampling rate and the predetermined offset.

10. The method of claim 1, wherein the filter is determined as any one of a plurality of filters based on a value of the reference sample and a predetermined threshold.

11. The method of claim 10, wherein samples within a template of the reference block are classified into a plurality of sample intervals based on the predetermined threshold, and

wherein the plurality of filters are derived for the plurality of sample intervals, respectively.

12. The method of claim 1, wherein the prediction sample is generated based on a plurality of filters including the filter, and

wherein the plurality of filters are derived from a plurality of template candidates, respectively.

13. An image encoding method, comprising:

determining a reference block for intra prediction of a current block;

generating a prediction sample of the current block by applying a filter to at least one of a reference sample belonging to the reference block, at least one neighboring sample adjacent to the reference sample, or a predetermined offset;

deriving a residual sample of the current block based on the prediction sample; and

encoding the residual sample.

14. A computer-readable storage medium storing a bitstream generated by the image encoding method according to claim 13.

15. A method for transmitting data, comprising:

obtaining a bitstream for image information, wherein the bitstream is generated by determining a reference block of a current block for intra prediction of the current block, generating a prediction sample of the current block by applying a filter to at least one of a reference sample belonging to the reference block, at least one neighboring sample adjacent to the reference sample, or a predetermined offset, deriving a residual sample of the current block based on the prediction sample, and encoding the residual sample;
and
transmitting data including the bitstream.

FIG.1

# FIG.2

INPUT IMAGE (PICTURE) → IMAGE PARTITIONER (210)

ENCODING APPARATUS (200)

- IMAGE PARTITIONER (210)
- INTER PREDICTOR (221), INTRA PREDICTOR (222), predictor (220)
- DPB, MEMORY (270)
- FILTER (260)
- (231, 230) adder
- TRANSFORMER (232)
- QUANTIZER (233)
- ENTROPY ENCODER (240) → BITSTREAM
- DEQUANTIZER (234)
- INVERSE TRANSFORMER (235)
- (250) adder

EP 4 654 586 A1

# FIG.3

FIG.4

```
┌─────────────────────────────────────────────┐
│ Determine reference block for intra prediction of │ ──── S400
│                 current block                  │
└─────────────────────────────────────────────┘
                      │
                      ▼
┌─────────────────────────────────────────────┐
│  Generate prediction sample of current block by  │ ──── S410
│  applying filter to reference sample belonging to │
│                 reference block                 │
└─────────────────────────────────────────────┘
                      │
                      ▼
┌─────────────────────────────────────────────┐
│  Reconstruct current block based on prediction  │ ──── S420
│            sample of current block             │
└─────────────────────────────────────────────┘
```

FIG. 5

331

Intra predictor

| Reference block determiner | → | Reference sample compensator |

500                    510

FIG. 6

| Determine reference block for intra prediction of current block | S600 |

↓

| Generate prediction sample of current block by applying filter to reference sample belonging to reference block | S610 |

↓

| Derive residual sample based on prediction sample of current block | S620 |

↓

| Encode residual sample | S630 |

FIG. 7

222

Intra predictor

Reference
block
determiner

Reference
sample
compensator

700            710

FIG. 8

# EP 4 654 586 A1

## INTERNATIONAL SEARCH REPORT

| | International application No. |
|---|---|
| | **PCT/KR2024/001026** |

| A. | CLASSIFICATION OF SUBJECT MATTER |
|---|---|
| | **H04N 19/593**(2014.01)i; **H04N 19/105**(2014.01)i; **H04N 19/80**(2014.01)i; **H04N 19/176**(2014.01)i |

According to International Patent Classification (IPC) or to both national classification and IPC

| B. | FIELDS SEARCHED |
|---|---|

Minimum documentation searched (classification system followed by classification symbols)

H04N 19/593(2014.01); H04N 19/105(2014.01); H04N 19/117(2014.01); H04N 19/132(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(predict), 참조(reference), 샘플(sample), 필터(filter)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2023-0003005 A (TENCENT AMERICA LLC) 05 January 2023 (2023-01-05)<br>See paragraphs [0024]-[0026], [0032]-[0036], [0080]-[0090] and [0110]; claim 1; and figures 7-8. | 1-15 |
| Y | YOUVALARI, Ramin G. et al. AHG12: Filtered Template Matching based Intra Prediction (FTMP). JVET-AC0146-v2, Joint Video Experts Team (JVET) of ITU-T SG 16 WP 3 and ISO/IEC JTC 1/SC 29, 29th Meeting, by teleconference. pp. 1-4, 13 January 2023.<br>See pages 1-3; and figure 1. | 1-15 |
| Y | KR 10-2022-0019288 A (HUAWEI TECHNOLOGIES CO., LTD.) 16 February 2022 (2022-02-16)<br>See paragraphs [0180]-[0190]; and figure 4a. | 9 |
| Y | KR 10-2019-0123288 A (IUCF-HYU (INDUSTRY-UNIVERSITY COOPERATION FOUNDATION HANYANG UNIVERSITY)) 31 October 2019 (2019-10-31)<br>See claims 1-2. | 10-11 |
| A | KR 10-2020-0066638 A (SAMSUNG ELECTRONICS CO., LTD.) 10 June 2020 (2020-06-10)<br>See claims 1-13. | 1-15 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 April 2024** | **25 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 654 586 A1

| INTERNATIONAL SEARCH REPORT | | | | | | International application No. |
| --- | --- | --- | --- | --- | --- | --- |
| Information on patent family members | | | | | | PCT/KR2024/001026 |

| Patent document cited in search report | | | Publication date (day/month/year) | Patent family member(s) | | | Publication date (day/month/year) |
| --- | --- | --- | --- | --- | --- | --- | --- |
| KR | 10-2023-0003005 | A | 05 January 2023 | CN | 115529852 | A | 27 December 2022 |
| | | | | EP | 4107949 | A1 | 28 December 2022 |
| | | | | EP | 4107949 | A4 | 04 October 2023 |
| | | | | JP | 2023-527666 | A | 30 June 2023 |
| | | | | JP | 7395771 | B2 | 11 December 2023 |
| | | | | US | 2022-0345692 | A1 | 27 October 2022 |
| | | | | WO | 2022-232784 | A1 | 03 November 2022 |
| KR | 10-2022-0019288 | A | 16 February 2022 | CN | 114009048 | A | 01 February 2022 |
| | | | | CN | 114009048 | B | 16 May 2023 |
| | | | | EP | 3973711 | A1 | 30 March 2022 |
| | | | | JP | 2022-537749 | A | 29 August 2022 |
| | | | | JP | 7383736 | B2 | 20 November 2023 |
| | | | | US | 2022-0116597 | A1 | 14 April 2022 |
| | | | | WO | 2020-256596 | A1 | 24 December 2020 |
| KR | 10-2019-0123288 | A | 31 October 2019 | CN | 116233423 | A | 06 June 2023 |
| | | | | EP | 3979639 | A1 | 06 April 2022 |
| | | | | KR | 10-2022-0127948 | A | 20 September 2022 |
| | | | | KR | 10-2443959 | B1 | 16 September 2022 |
| | | | | US | 11553186 | B2 | 10 January 2023 |
| | | | | US | 2023-0106301 | A1 | 06 April 2023 |
| | | | | WO | 2018-174593 | A1 | 27 September 2018 |
| KR | 10-2020-0066638 | A | 10 June 2020 | CN | 116156166 | A | 23 May 2023 |
| | | | | KR | 10-2539068 | B1 | 01 June 2023 |
| | | | | WO | 2019-088700 | A1 | 09 May 2019 |

Form PCT/ISA/210 (patent family annex) (July 2022)